# EUROPEAN PATENT SPECIFICATION

(11) **EP 3 637 717 B1**
(45) Date of publication and mention of the grant of the patent: **05.01.2022**
(21) Application number: 18199158.9
(22) Date of filing: 08.10.2018
(51) Int. Cl.: H04L 29/06

(54) **SYSTEM AND METHOD FOR ESTABLISHING TRUST OF A NETWORK DEVICE**
SYSTEM UND VERFAHREN ZUM HERSTELLEN DES VERTRAUENS EINER NETZWERKEINRICHTUNG
SYSTÈME ET PROCÉDÉ PERMETTANT D'ÉTABLIR LA CONFIANCE D'UN DISPOSITIF DE RÉSEAU

(43) Date of publication of application: 15.04.2020
(73) Proprietor: Rohde & Schwarz GmbH & Co. KG, 81671 München (DE)
(72) Inventor: STUEBLE, Christian, 44801 Bochum (DE)
(74) Representative: Isarpatent

(56) References cited:
- EP-A1- 3 382 537
- US-A1- 2010 122 333
- US-B1- 8 751 800

## Description

### Technical field

The present invention relates to a system for establishing trust, and a method for establishing trust. In particular, the present invention relates to establishing trust of a device in a network.

### Background

US 8751800 B1 describes interoperability by establishing a trust relationship between a provider of a media player usable by a consumer and a content provider. A trust relationship is verified through using a public-private key certification authority. When a request for content is received from a consumer, the request might indicate what content protection mechanisms are available in the consumer's device.

US 2010/122333 A1 describes a mechanism to allow the trust level to decrease without re-authenticating with the single sign on system, down to the level at which it is no longer sufficient to obtain access to a desired resource.

EP 3382537 A1 describes a method for verifying that usage of virtual network function by a plurality of compute nodes comply with allowed usage rights.

Heterogeneous networks are used for many computational activities. Accordingly, multiple computing devices may be involved for performing such activities. Depending on an application, sensitive data may be processed by one or more computational devices in such a network. Thus, an attacker may try to get access to the sensitive data. For example, the attacker may try to get access to one of the computational devices receiving or processing sensitive data.

For example, an attacker may manipulate one of the computational devices. A manipulation may be subjected to hardware or software of the computational devices. To prevent such an attack, it may be verified whether or not a manipulation of a computational device is detected. For this purpose, it may be verified whether or not a computational device is trustworthy, and only if the verification of the device is successful, a further device may provide sensitive data to the verified computational device. Such a verification of a remote device is known for instance, as remote attestation. In view of the increasing number of cloud computing services and the increasing number of clusters of internet of things (IoT) systems, which deal with sensitive data, there is a need for a simple, reliable and versatile remote attestation. In particular, there is a need for an efficient and versatile establishing of trust of a network device.

### Summary

The present invention provides a system and a method for establishing trust of a network device according to the features of the independent claims. Further advantageous features are subject matter of the dependent claims.

According to a first aspect, a system for establishing trust of a network device is provided. The system comprises a first network device and a second network device. The first network device comprises a trust information unit. The trust information unit is adapted to generate trust information data. The trust information unit is further adapted to apply modification protection on the generated trust information data. Further, the trust information unit is adapted to forward the protected trust information data to the second network device. The second network device is adapted to receive the protected trust information data sent by the first network device. The second network device is further adapted to store the received trust information data, and to provide the stored trust information data to a further network device. In particular, the trust information data provided by the second network device relate to a predetermined point in time or a predetermined period of time.

According to a second aspect, a method for establishing trust in a network is provided. The method comprises a step of generating trust information data by a trust information unit of a first network device. The method further comprises applying modification protection on the generated trust information data by the trust information unit of the first network device. Further, the method comprises forwarding the protected trust information data from the first network device to a second network device, and storing the forwarded trust information data in a memory of the second network device. Further, the method comprises a step of providing the stored trust information data by the second network device to a further network device. In particular, the trust information data provided by the second network device relate to a predetermined point in time or a predetermined period of time.

The present invention is based on the fact that processing sensitive data in a distributed network comprising multiple computational devices requires trustworthiness of devices processing the sensitive data. It is for this purpose, that trustworthiness of a device is verified before sending sensitive data to a device or processing data received from the device. Such verification is known, for example as remote attestation. However, remote attestation usually only relates to a specific point in time. Further, remote attestation may require complex approaches such as TM-Coin (Trusted computer base Measurement Coin).

It is therefore an idea of the present invention to provide a versatile, flexible and reliable approach for establishing trust of a network device, in particular establishing trust of a remote network device. For this purpose, trust information of the respective network device are protected and the protected trust information of the network device is stored by a further network device, for example a device in a cloud. In particular, each protected trust information may relate to a specific point in time. The protection of the trust information may take into account this specific point in time. For example, previously protected trust information may be taken into account for protecting current trust information. Accordingly, reliability of protected current trust information may be verified based on previous trust information.

Establishing trust of a device may be considered as to determine that the respective device has not been manipulated by an attacker. Manipulating a device by an attacker may comprise manipulating software or hardware of the respective device. For example, an attacker may try to install unauthorized software in order to obtain control of the device or at least to get access to data stored or processed by the device. For example, such a software may be installed as a separate software component or a part of an already installed software component, in particular as a part of an operating system or the like. Furthermore, an attacker may also try to install additional hardware which may forward sensitive data to a further device which is controlled by the attacker. However, it is understood that any other kind of attack, in particular any kind of attack which allows an attacker to get access to the device or at least to data processed by the device may be also possible. Hence, establishing trust of the device may be considered as to verify that the respective device is not manipulated in any way allowing an attacker to get access to the device or at least to data processed by the device.

The first network device (first device for short) may be any kind of network device dealing with data, in particular sensitive data. In this connection, sensitive data may be any kind of data which should be not public available. For example, sensitive data may be data relating to a privacy of a user, e.g. contact data, birth date, financial data, e.g. credit card number, authentication data, e.g. a password, or any other confidential data. Furthermore, sensitive data may also comprise data relating to a behavior of a system or a user, data for controlling a system, e.g. an industrial application, or any other system. For example, an attacker may manipulate a system by manipulating control sequences for such a system or even by manipulating sensor data which are used for controlling a system. Hence, a controller which has to process sensor data needs to verify the reliability of the sensor data provided by the individual sensors. For this purpose, it may be necessary that the control system has to check the trustworthiness of the sensors or the devices providing the sensor data. Accordingly, the first device may relate to any kind of device, for example a device of an internet of things, a control system of an application, for example an industrial application, an access control system, a vehicle or any other kind of control system. Furthermore, the first device may also relate to a device of a communication network such that the trustworthiness of the devices can be verified to avoid interception or any other kind of manipulation of communication. Furthermore, it is understood that any other kind of application requiring remote attestation may be also possible.

The second network device (of second device for short) may be any kind of device for storing the protected trust information and providing the stored trust information upon request. For example, the second device may be a device in a cloud computing system. In particular, the second device may be a device separate of the first device. For example, the first device and the second device may be located at different spatial locations. The first device and the second device may be communicatively coupled by a network, for example a communication network. In particular, a wired or a wireless communication may be established between the individual network devices.

The further network device (or further device for short) may be any kind of device in the network which may provide data to the first network device and/or may receive data from the first network device. For example, the further device may provide sensitive data to the first network device. Accordingly, before providing such sensitive data to the first device, the further device may verify the trustworthiness of the first device. Only if trust is established with the first network device, the further network device may provide the sensitive data to the first network device. Additionally or alternatively, the further device may receive data from the first network device. For example, the further device may receive measurements, such as sensor data or the like, and perform a control of a system based on the received data. Hence, the trustworthiness of the received data has to be verified in order to avoid a manipulation of the system based on manipulated sensor data. However, it is understood that the present invention is not limited to the before-mentioned applications. Any other kind of application requiring trust of a device may be also possible.

Trust information data may be any kind of data which are appropriate for confirming trustworthiness of the respective device. In a very simple example, only a checksum or a hash value may be computed. This value may relate to a particular configuration of a software or hardware. Accordingly, by changing the software or hardware, the respective checksum or hash value may also change, and thus a manipulation may be identified. However, it is understood that any other kind for determining trust information data, in particular for generating data which may be used for confirming the authenticity of the respective component or identify a manipulation in software and/or hardware of a device may be also possible. Methods and applications for generating trust information data relating to a trustworthiness of software or hardware are already known. Thus, further explanations are omitted herewith.

Applying modification protection to trust information data may be any kind of method for protecting the trust information data. For example, the trust information data may be associated with additional data, wherein the additional data are generated to approve the reliability of the trust information data. For instance, a secret key may be used for generating additional data relating to the trust information data. In such a case, a further public key, associated with the secret key, may be used in order to verify the authenticity of the trust information data. Alternatively, it may be also possible to encrypt the trust information data by a secret key, and use a corresponding public key for decrypting the trust information data. However, it is understood that any other appropriate scheme for protecting the trust information data may be possible. In particular, any kind of algorithm may be used for protecting the trust information data and for confirming the correctness of the trust information data. The trust information data may be associated with previous trust information data, especially with protected previous trust information data when protecting the trust information data. In this way, current trust information data are irreversible related to the previous trust information data. Consequently, a manipulation of previous trust information data might be also have impact to the current trust information data.

Accordingly, by providing trust information data relating to a predetermined point in time or a predetermined period of time, it may be possible to take into account previous trust information data when establishing trust of a network device. Hence, the reliability can be significantly improved.

Further embodiments of the present invention are subject of the further sub-claims and the following description referring to the drawings.

In a possible embodiment, the trust information unit of the first network device comprises a storage unit. The storage unit is adapted to store the protected trust information.

For example, the storage unit may be arranged in a protected area of the trust information unit. Accordingly, manipulation of the trust information can be prevented. However, it may be also possible that the storage unit may be arranged at another position. In particular, it may be even possible that the storage unit may be located separate from the trust information unit. By storing trust information data at the first network device and providing the stored trust information data to the trust information unit, previous trust information data can be used, for example, for protecting the trust information data.

In a possible embodiment, the trust information unit of the first network device is adapted to apply the modification protection based on previous trust information data, in particular based on previous protected trust information data.

In particular, it may be possible to use the trust information data stored in the storage unit of the first network device. By using previous trust information data for protecting current trust information data, the current trust information data are associated with the previous trust information data, and thus a manipulation of previous trust information data can be detected even by analyzing the protection of the current trust information data. In this way, a later manipulation of the previous trust information data can be detected and thus, the later manipulation of the trust information data can be prevented.

In a possible embodiment, the trust information unit of the first network device is adapted to apply the modification protection using blockchain.

Blockchain uses an approach for protecting current data based on previous data. In particular, one or more previous data sets are taken into account when verifying a data set. Thus, only if all the previous data sets are valid, the authenticity of the current data set can be confirmed. In this way, a manipulation of all data sets in a chain of a number of subsequent data sets can be prevented.

In a possible embodiment, the trust information unit comprises a trusted platform module. In particular, the trust information unit may comprise a trusted platform module 2.0.

Trusted platform modules are available, for example, based on customized semiconductor chips. Accordingly, a very efficient realization of the trust information module can be achieved. Furthermore, by using a hardware module for realizing the trust information unit, manipulation based on software can be prevented.

In a possible embodiment, the trust information data is generated based on at least one of the following features: timer data, measurement of a software configuration, counting of boot cycles.

Timer data may be obtained, for instance, by a timer, in particular a hardware timer of the respective first network device. Accordingly, a specific time stamp information can be applied to each trust information data. A measurement of software configuration may be any kind of specification for characterizing a present software configuration. For example, in a very simple embodiment a check sum or a hash value is computed. However, any other approach for characterizing a software configuration of a software module or a whole software configuration of a device may be also possible. By counting the number of boot cycles of a devices, it is possible to identify unexpected reboots of the device. Accordingly, some attacks may be based on manipulation of a boot loader, a basic input/output system or any other software component which can be only introduced into a system during a boot sequence. Furthermore, some hardware components also may be added by rebooting a device. Accordingly, by monitoring the number of boot cycles, an unexpected reboot and thus a manipulation of the system may be also identified.

In a possible embodiment, the predetermined point in time or the predetermined period of time includes at least one point in time in the past.

By providing trust information data relating to a point in time in the past, it is possible to establish trust of a network device taking into account previous trust information data, and thus associating current trust information data with previous trust information data.

In a possible embodiment, the system for establishing trust of a network device comprises a further network device. The further network device may be adapted to request trust information data from the second network device. The requested trust information data may relate to a predetermined point in time or a predetermined period of time. The second network device may be adapted to provide trust information data relating to the requested predetermined point in time or the predetermined period of time. The second network device may provide the trust information data to the further network device.

Accordingly, the point in time or the period of time may be specified by the further network device, and the second network device may provide trust information data according to the specification of the further network device. In this way, the respective trust information data can be specified by the further network device, and the further network device can establish trust based on the requested trust information data provided by the second network device.

In a possible embodiment, the further network device is adapted to establish trust of the first network device based on the trust information data provided by the second network device.

Accordingly, the further network device may request trust information data to a specific point in time or period of time from the second network device. The second network device, i.e. a device different from the first network device, may provide the requested trust information data. Based on the provided trust information data, the further network device can establish trust of the first network device. Hence, trust of a network device is established based on data provided by another network device.

In a possible embodiment, the requested trust information data may comprise trust information data relating to a current configuration.

The current configuration may be the configuration presently applied to the first network device. Accordingly, the further network device may establish trust of the first network device based on the presently used configuration. Furthermore, the trust may be established by not only taking into account the current configuration, but also trust information data relating to a previous point in time.

In a possible embodiment, the first network device and second network device may comprise communication interfaces. Accordingly, the first network device may comprise at least one communication interface, and the second network device may comprise at least one communication interface. The communication interfaces may be adapted to perform a wired or a wireless communication, in particular a communication in a network.

The wired communication may be based on any appropriate network standard. For example, an Ethernet communication may be used. However, it may be also possible to use any other kind of network communication. In particular, a communication bus may be also used, e.g. CAN-bus or the like. Furthermore, any kind of appropriate wireless communication may be used. For example, a wireless local area network (WLAN) may be used. However, any other wireless communication may be possible, for example, Bluetooth, Zigbee, etc. Furthermore, the wireless communication may be a communication according to 3G, 4G, 5G or the like. However, it is understood that any other wireless communication may be also possible. Furthermore, the communication network may comprise both, wired and wireless network devices.

The method for establishing trust of a network device comprise a step of requesting trust information data from the second network device by the further network device. The requested trust information data may relate to a predetermined point in time or a predetermined period of time. Accordingly, the step of providing the stored trust information data by the second network device may provide trust information data relating to the requested predetermined point in time or the requested predetermined period of time. The requested trust information data may be provided to the further network device.

In a possible embodiment of the method, the predetermined point in time or the predetermined period of time may include at least one point of time in the past.

In a possible embodiment, the method may comprise establishing trust of the first network device based on the trust information data provided by the second network device.

### Brief description of the drawings

For a more complete understanding of the present invention and advantages thereof, reference is now made to the following description taken in conjunction with the accompanying drawings. The invention is explained in some more detail below using exemplary embodiments which are specified in the schematic figures of the drawings, in which:
- Fig. 1: shows a block diagram of a system for establishing trust according to an embodiment of the present invention;
- Fig. 2: shows a block diagram of a first network device of a system for establishing trust according to an embodiment;
- Fig. 3: shows a block diagram of a second network device in a system for establishing trust according to an embodiment;
- Fig. 4: shows a timing diagram illustrating the generation of trust information data according to an embodiment; and
- Fig. 5: shows a flow diagram illustrating a method for establishing trust according to an embodiment.

The appended drawings are intended to provide further understanding of the embodiments of the invention. The drawings illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalents and identical operating elements, features and components are provided with the same reference signs in each case, unless stated otherwise.

### Description of embodiments

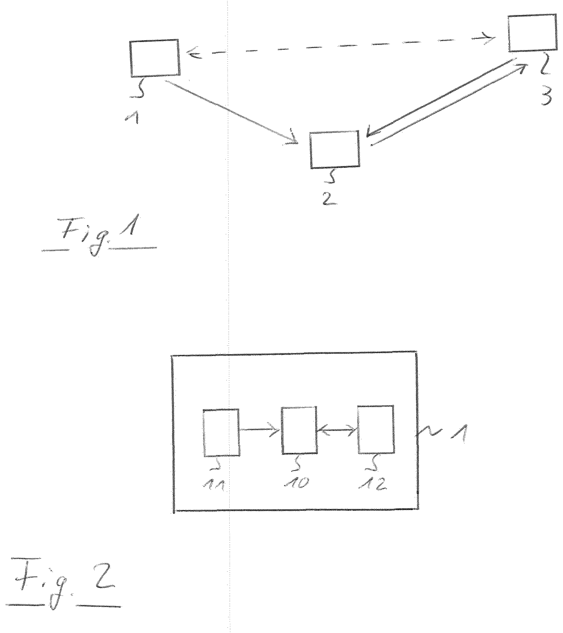

Fig. 1 shows a schematic block diagram of a system for establishing trust of a network device. The system 1 comprises at least a first network device 1 and a second network device 2. The system may also comprise a further network device 3. In particular, the system may be capable of establishing trust of the first network device 1. For this purpose, the first network device 1 may generate trust information data, protect the generated trust information data and forward the protected trust information data to the second network device 2. The second network device 2 may store the protected trust information data received from the first network device 1 and provide the stored trust information data relating to a specific point in time or a specific period of time upon request. Accordingly, based on the provided trust information data relating to the specific point in time or the specific period of time, the authenticity of the first network device 1 can be approved.

The second network device 2 may be any kind of device which is appropriate to receive the protected trust information data from the first network device 1, to store the received trust information data and provide the stored trust information data relating to a specific point in time or a specific period of time according to a request received from the further network device 3. For example, the second network device 2 may be a network device of a cloud computing system. Since the trust information data received from the first network device 1 are protected trust information data, no specific security measures have to be applied to the second network device 2. Moreover, the authenticity of the protected trust information data can be approved based on the applied protection scheme. As described in further detail below, the protection of the trust information data may refer to previous trust information data, i.e. trust information data relating to a previous point in time. Accordingly, a sequence of successive trust information data is protected, since a modification of previous trust information data would also have an impact to the protection of successive trust information data.

The first network device 1 and the second network device 2 may be communicatively coupled by means of a network infrastructure. The further network device 3 may be also part of this network infrastructure. For example, the network devices 1, 2, 3 may be communicatively coupled by means of a wired network. The wired network may be, for example an Ethernet network or any other kind of wired network. For instance, the network devices 1, 2, 3 may be also communicatively coupled by means of a bus system such as a CAN-bus or the like. Additionally or alternatively, the network devices 1, 2, 3 may be communicatively coupled by a wireless network. For example, the wireless network may be a WLAN network. The wireless network may be also, for example a network according to Bluetooth, Zigbee or any other wireless communication standard or an appropriate communication protocol. Further, the network devices 1, 2, 3 may be communicatively coupled by means of a communication network such as UMTS, LTE, in particular 3G, 4G, 5G or the like. However, it is understood that any other wired or wireless communication standard may be also applied to the network comprising the network devices 1, 2, 3.

The first network device 1 may be any kind of network device for which trust is to be established. For example, the first network device 1 may be a network device which is storing or processing sensitive data, for example data relating to a privacy of users, financial data, etc. Accordingly, the further network device 3 only provides sensitive data to the first network device 1, if trust is established for the first network device 1. Otherwise, if trust cannot be established for the first network device 1, it may be assumed that an attacker might have control of the first network device 1 and might have access to sensitive data processed on the first network device 1.

Alternatively, the further network device 3 may be a network device which may provide control signals, for example control signals to a technical system such as a process system, an access control system, etc. In such a scenario, the further network device 3 may receive measurements or sensor data from a number of one or more first devices 1. For example, the first device 1 may comprise a sensor providing measurements, in particular sensor data relating to a specific parameter of the system which is to be controlled. Accordingly, the operation of the further device 3 may depend on the sensor data provided by the first device 1. Accordingly, by providing manipulated sensor data from the first device 1 to the further device 3, the control parameter generated by the further device 3 can be influenced. Thus, the further device 3 has to ensure that the data provided by the first device 1, e.g. a sensor or the like, have not been manipulated. Accordingly, the further device 3 also has to establish trust on the first device 1.

However, any further scenario in which a further device 3 has to establish trust on a first device 1 may be also possible.

In order to enable establishing trust of the first network device 1, the first network device 1 may generate trust information data. The trust information data relating to the first network device 1 have to be provided to the further network device 3 and the further network device 3 may establish trust on the first network device 1 based on the trust information data of the first network device 1. The trust information data may be any kind of data which may be used for confirming that the first device 1 has a configuration which has not been manipulated. For example, the trust information data may relate to data specifying the hardware configuration and/or the software configuration of the first network device 1. In a very simple example, such trust information data may comprise a checksum or a hash value. However, it is understood that any further measurement for describing the software or hardware configuration of the first network device 1 may be also possible. For example, the trust information data may comprise information describing a number of boot cycles of the first network device 1. Such a boot counter may count the number of boot cycles and accordingly, any further reboot of the first network device 1 can be identified. Accordingly, an attack requiring a reboot of the first network device 1 can be identified. The trust information data may also comprise a measurement of the software configuration. For example, the trust information data may comprise a measurement of the whole software configuration of the first network device 1. Additionally or alternatively, the trust information data may also refer only to a number of one or more software modules installed on the first network device 1. Any appropriate measurement for confirming an authenticity of a software or hardware of the first network device 1 may be possible. The trust information data may further comprise time information, for example time information provided by a timer. Accordingly, each trust information data may be associated with a time stamp information. In this way, a point of time for each trust information data can be specified based on the provided timer data.

The generation of the trust information data and/or the forwarding of the protected trust information data to the second network device may be performed or controlled by a trust information unit 10 of the first network device 1. The specific configuration and operation of the trust information unit 10 is described in more detail below.

With the configuration described above, the first network device 1 may provide the protected trust information data to the second network device 2. The second network device 2 stores the provided trust information data. The further network device 3 may issue a request for specific trust information data, for example trust information data relating to a predetermined point in time or a predetermined period of time. Upon receiving such a request, the second network device 2 may provide the requested trust information data to the further network device 3. The further network device 3 may analyze the trust information data provided by the second network device 2 in order to establish trust of the first network device 1.

Fig. 2 shows a block diagram illustrating an exemplary embodiment of the first network device 1. As already described above, the first network device 1 may comprise a trust information unit 10. For example, the trust information unit 10 may be a trusted platform module. In particular, the trusted platform module may be a kind of hardware, for example a semiconductor chip which is configured to perform the operations of the trust information unit 10. In particular, the trust information unit 10 may comprises a trusted platform module according to TPM 2.0. The trust information unit 10 may receive data for generating trust information data. For example, trust information unit 10 may receive time information from a timer 11. Alternatively, the timer may be also included in the trust information unit 10. Further, element 11 may be, for example, a boot counter counting the number of boot cycles of the first device 1. Furthermore, element 11 may be a measurement unit for measuring a configuration of software installed on the first network device 1 and/or a hardware configuration of the first network device 1. However, it is understood that element 11 may also provide any other feature or measurement which can be used for confirming the authenticity of the first network device 1.

Based on the acquired data, trust information unit 10 may generate trust information data specifying the configuration, in particular trust information data specifying the configuration of the first network device 1. Furthermore, trust information unit 10 may apply a protection on the generated trust information data. The protection of the trust information data may ensure the authenticity of the generated trust information data. For example, a cryptographic approach may be applied. In an example, a private key may be used in order to protect the trust information data, and a public key may be used in order to confirm the authenticity of the protected trust information data. However, it is understood that any other approach for protecting the trust information data may be also possible.

For protecting the trust information data, it may be possible to use an approach referring to previous trust information data, in particular to protected previous trust information data. Accordingly, by including information of protected previous trust information data in the protection of current trust information data, it is possible to ensure the authenticity of a sequence of trust information data. In particular, a manipulation of previous trust information data would also have impact to the analysis of the later trust information data. Such an approach for protecting data by referring to previous data is known, for example by a blockchain approach.

In order to refer to previous trust information data, the first device 1 may comprise a storage unit 12. For example, the storage unit 12 may be included in the trust information unit 10. Accordingly, trust information unit 10 may locally store the trust information data, in particular the protected trust information data in memory 12. Hence, trust information unit 10 can refer to this locally stored trust information data referring to previous points in time when protecting a current trust information data.

Further, the first network device 1, in particular trust information unit 10, may forward the generated and protected trust information data to the second network device 2.

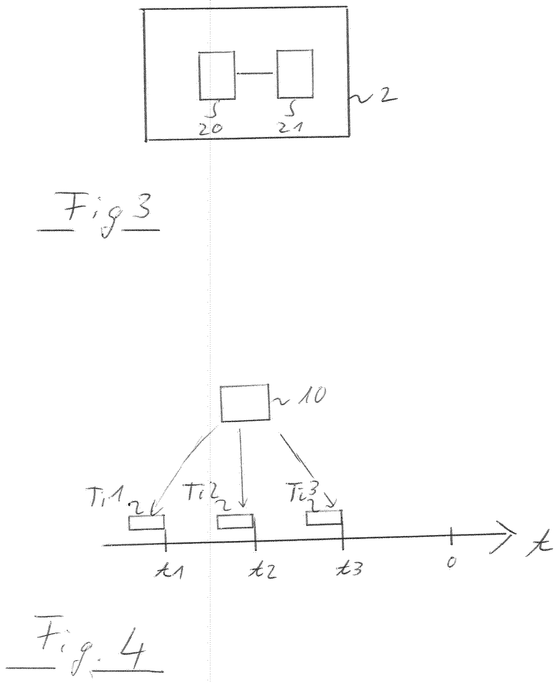

Fig. 3 shows a block diagram illustrating an exemplary embodiment of a second network device 2. The second network device 2 may receive the protected trust information data from the first network device 1. The received protected trust information data from the first network device 1 may be stored in a memory 20 of the second network device 2. For example, the protected trust information data may comprise time stamp information for specifying a point of time to which the protected trust information data refer. Additionally or alternatively, the second network device 2 may add time stamp information to the received trust information data and store this time stamp information together with the received trust information data.

The second network device 2 may be further adapted to receive requests from one or more further network devices 3. In particular, the second network device 2 may receive requests for protected trust information data. The requests may specify a specific point in time and/or a specific period of time. Based on such a request, the second network device 2 may provide the corresponding trust information data to the further network device 3. In particular, the request for providing specific trust information data may refer to trust information data in the past. Additionally, the request may also refer to current trust information data.

The processing of the received requests, the reference to the memory 20 and the provision of the requested trust information data may be performed, for example by a processor 21 of the second network device 2.

Accordingly, the further network device 3 may analyze the trust information data provided by the second network device 2 in order to establish trust of the first network device 1. By referring to previous trust information data, i.e. trust information data referring to a previous point in time or a previous period of time, it is possible to analyze the authenticity of the first network device based on such previous information. Hence, since the trust information data may be protected based on previous trust information data, it is possible to verify the protection of current trust information data even by taking into account the previous trust information data. In this way, a manipulation even at a previous point in time can be detected.

Fig. 4 shows a timing diagram illustrating the generation of trust information data according to an exemplary embodiment. Even though only three points in time are illustrated in Fig. 4, the present invention is not limited to such a number of trust information data. Moreover, any number of trust information data can be generated and processed. The generation of the trust information data is performed by a trust information unit 10, as already described above. At a first point in time t1, first trust information data are generated and protected by trust information unit 10. The first protected trust information data Ti1 are forwarded to the second network device 2. At a second point in time t2, second trust information data are generated and protected. The protection of the second trust information data may refer to the first protected trust information data Ti1. The protected second trust information data Ti2 are also forwarded to the second network device 2. At a third point in time t3, third trust information data are generated and protected. The protection of the third trust information data makes reference to at least the previously protected second trust information data Ti2. Again, the third trust information data are forwarded to the second network device 2.

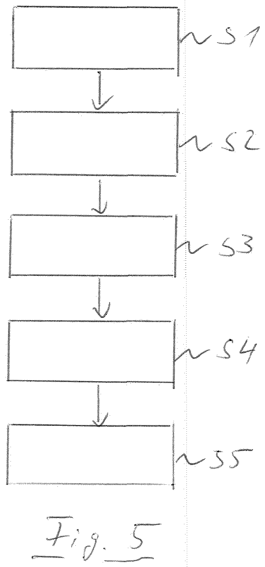

Fig. 5 shows a flow diagram illustrating a method for establishing trust in a network according to an embodiment. In step S1, trust information data are generated by a trust information unit 10 of a first network device 1. In step S2, modification protection is applied on the generated trust information data by the trust information unit 10 of the first network device 1. In step S3, the protected trust information data are forwarded from the first network device 1 to a second network device 2. In step S4, the forwarded trust information data are stored in a memory of the second network device 2. In step S5, the stored trust information data are provided by the second network device 2 to a further network device 3. In particular, the provided trust information data relate to a predetermined point in time or a predetermined period of time.

The method may further comprise a step of requesting trust information data from the second network device 2 by the further network device 3. The requested trust information data may relate to a predetermined point in time or a predetermined period of time. In this case, the step S5 of providing the stored trust information data by the second network device 2 provides the trust information data relating to the requested predetermined point in time or the requested predetermined period of time. The trust information data may be provided to the further network device 3.

The predetermined point in time or the predetermined period of time may include at least one point of time in the past.

The method may further comprise establishing trust of the first network device based on the trust information data provided by the second network device.

Summarizing, the present invention relates to establishing trust of a network device. For this purpose, trust information data referring to a first network device are generated and protected. The protected trust information data are forwarded to a second network device. The second network device stores the protected trust information of the first network device. Further, the second network device may forward the stored trust information data to a further network device upon request. In particular, a request for protected trust information data may refer to trust information data referring to a point in time or a period of time in the past. In this way, protected trust information data can be provided by a network device which is separated from the network device on which trust has to be established. By providing trust information data of previous point in time, the protection of the trust information data may make reference to previous trust information data. Thus, protection approaches such as blockchain can be applied.

## Claims

1. System for establishing trust of a network device, the system comprising:
a first network device (1) and a second network device (2), wherein
the first network device (1) includes a trust information unit (10) adapted to generate trust information data,
apply modification protection on the generated trust information data, and forward the protected trust information data to the second network device (2); and
the second network device (2) is adapted to receive the protected trust information data from the first network device (1), store the received trust information data, and
provide the stored trust information to a further network device (3),
wherein the second network device (2) is adapted to receive a request for trust information data from the further network device (3), the request specifying
a predetermined point in time or
a predetermined period
of time, and wherein the provided trust information data relate to the predetermined point in time or the predetermined period of time.

2. System according to claim 1, wherein the trust information unit (10) of the first network device (1) comprises a storage unit (12) adapted to store the protected trust information.

3. System according to claim 2, wherein the trust information unit (10) of the first network device (1) is adapted to apply the modification protection based on previous trust information data.

4. System according to any of claims 1 to 3, wherein the trust information unit (10) of the first network device (1) is adapted to apply the modification protection using blockchain.

5. System according to any of claims 1 to 4, wherein the trust information unit (10) comprises a trusted platform module, in particular a trusted platform module 2.0.

6. System according to any of claims 1 to 5, wherein the trust information data is generated based on at least one of timer data, measurement of a software configuration, counting of boot cycles.

7. System according to any of claims 1 to 6, wherein the predetermined point in time or a predetermined period of time includes at least one point of time in the past.

8. System according to any of claims 1 to 7, comprising a further network device (3) adapted to request trust information data from the second network device (2), the requested trust information data relating to a predetermined point in time or a predetermined period of time

9. System according to claim 8, wherein the further network device (3) is adapted to establish trust of the first network device (1) based on the trust information data provided by the second network device (2).

10. System according to claim 8 or 9, wherein the requested trust information data comprise trust information data relating to a current configuration

11. System according to any of claims 1 to 10, wherein the first network device (1) and second network device (2) each comprise a communication interface adapted to perform a wired or wireless communication in a network.

12. Method for establishing trust of a network device, the method comprising:
generating (S1) trust information data by a trust information unit (10) of a first network device (1);
applying (S2) modification protection on the generated trust information data by the trust information unit (10) of the first network device (1);
forwarding (S3) the protected trust information data from the first network device (1) to a second network device (2) ;
storing (S4) the forwarded trust information data in a memory of the second network device (2);
receiving a request for trust information data from a further network device (3), the request specifying
a predetermined point in time or
a predetermined period of time; and
providing (S5) the stored trust information by the second network device to the further network device (3), wherein the provided trust information data relate to the predetermined point in time or the predetermined period of time.

13. Method according to claim 12, wherein the predetermined point in time or a predetermined period of time includes at least one point of time in the past.

14. Method according to claim 12 or 13, comprising establishing trust of the first network device based on the trust information data provided by the second network device (2).

## Patentansprüche

1. System zum Herstellen von Vertrauen einer Netzwerkvorrichtung, wobei das System Folgendes umfasst:
eine erste Netzwerkvorrichtung (1) und eine zweite Netzwerkvorrichtung (2), wobei
die erste Netzwerkvorrichtung (1) eine Vertrauensinformationseinheit (10) beinhaltet, die angepasst ist, Vertrauensinformationsdaten zu erzeugen, einen Modifikationsschutz auf die erzeugten Vertrauensinformationsdaten anzuwenden und die geschützten Vertrauensinformationsdaten zur zweiten Netzwerkvorrichtung (2) weiterzuleiten; und
die zweite Netzwerkvorrichtung (2) angepasst ist, die geschützten Vertrauensinformationsdaten von der ersten Netzwerkvorrichtung (1) zu empfangen, die empfangenen Vertrauensinformationsdaten zu speichern und die gespeicherten Vertrauensinformationen einer weiteren Netzwerkvorrichtung (3) bereitzustellen,
wobei die zweite Netzwerkvorrichtung (2) angepasst ist, eine Anforderung von Vertrauensinformationsdaten von der weiteren Netzwerkvorrichtung (3) zu empfangen, wobei die Anforderung einen vorbestimmten Zeitpunkt oder eine vorbestimmte Zeitperiode spezifiziert und wobei die bereitgestellten Vertrauensinformationsdaten den vorbestimmten Zeitpunkt oder die vorbestimmte Zeitperiode betreffen.

2. System nach Anspruch 1, wobei die Vertrauensinformationseinheit (10) der ersten Netzwerkvorrichtung (1) eine Speichereinheit (12) umfasst, die angepasst ist, die geschützten Vertrauensinformationen zu speichern.

3. System nach Anspruch 2, wobei die Vertrauensinformationseinheit (10) der ersten Netzwerkvorrichtung (1) angepasst ist, den Modifikationsschutz auf Basis der vorherigen Vertrauensinformationsdaten anzuwenden.

4. System nach einem der Ansprüche 1 bis 3, wobei die Vertrauensinformationseinheit (10) der ersten Netzwerkvorrichtung (1) angepasst ist, den Modifikationsschutz unter Verwendung einer Blockkette anzuwenden.

5. System nach einem der Ansprüche 1 bis 4, wobei die Vertrauensinformationseinheit (10) ein vertrauenswürdiges Plattformmodul umfasst, insbesondere ein vertrauenswürdiges Plattformmodul 2.0.

6. System nach einem der Ansprüche 1 bis 5, wobei die Vertrauensinformationsdaten auf Basis von mindestens einem von Timerdaten, einer Messung einer Softwareauslegung, einer Zählung von Bootzyklen erzeugt werden.

7. System nach einem der Ansprüche 1 bis 6, wobei der vorbestimmte Zeitpunkt oder eine vorbestimmte Zeitperiode mindestens einen Zeitpunkt in der Vergangenheit beinhaltet.

8. System nach einem der Ansprüche 1 bis 7, das eine weitere Netzwerkvorrichtung (3) umfasst, die angepasst ist, Vertrauensinformationsdaten bei der zweiten Netzwerkvorrichtung (2) anzufordern, wobei die angeforderten Vertrauensinformationsdaten einen vorbestimmten Zeitpunkt oder eine vorbestimmte Zeitperiode betreffen.

9. System nach Anspruch 8, wobei die weitere Netzwerkvorrichtung (3) angepasst ist, auf Basis der Vertrauensinformationsdaten, die von der zweiten Netzwerkvorrichtung (2) bereitgestellt werden, Vertrauen der ersten Netzwerkvorrichtung (1) herzustellen.

10. System nach Anspruch 8 oder 9, wobei die angeforderten Vertrauensinformationsdaten Vertrauensinformationsdaten umfassen, die eine aktuelle Auslegung betreffen.

11. System nach einem der Ansprüche 1 bis 10, wobei die erste Netzwerkvorrichtung (1) und die zweite Netzwerkvorrichtung (2) jeweils eine Kommunikationsschnittstelle umfassen, die angepasst ist, eine drahtgebundene oder eine drahtlose Kommunikation in einem Netzwerk durchzuführen.

12. Verfahren zum Herstellen von Vertrauen einer Netzwerkvorrichtung, wobei das Verfahren Folgendes umfasst:
Erzeugen (S1) von Vertrauensinformationsdaten durch eine Vertrauensinformationseinheit (10) einer ersten Netzwerkvorrichtung (1);
Anwenden (S2) eines Modifikationsschutzes auf die erzeugten Vertrauensinformationsdaten durch die Vertrauensinformationseinheit (10) der ersten Netzwerkvorrichtung (1);
Weiterleiten (S3) der geschützten Vertrauensinformationsdaten von der ersten Netzwerkvorrichtung (1) zur zweiten Netzwerkvorrichtung (2);
Speichern (S4) der weitergeleiteten Vertrauensinformationsdaten in einem Speicher der zweiten Netzwerkvorrichtung (2);
Empfangen einer Anforderung von Vertrauensinformationsdaten von einer weiteren Netzwerkvorrichtung (3), wobei die Anforderung einen vorbestimmten Zeitpunkt oder eine vorbestimmte Zeitperiode spezifiziert; und
Bereitstellen (S5) der gespeicherten Vertrauensinformationen durch die zweite Netzwerkvorrichtung für die weitere Netzwerkvorrichtung (3), wobei die bereitgestellten Vertrauensinformationsdaten den vorbestimmten Zeitpunkt oder die vorbestimmte Zeitperiode betreffen.

13. Verfahren nach Anspruch 12, wobei der vorbestimmte Zeitpunkt oder eine vorbestimmte Zeitperiode mindestens einen Zeitpunkt in der Vergangenheit beinhaltet.

14. Verfahren nach Anspruch 12 oder 13, das das Herstellen von Vertrauen der ersten Netzwerkvorrichtung auf Basis der Vertrauensinformationsdaten, die von der zweiten Netzwerkvorrichtung (2) bereitgestellt werden, umfasst.

## Revendications

1. Système pour l'établissement de la confiance d'un dispositif réseau, le système comprenant :
un premier dispositif réseau (1) et un second dispositif réseau (2), dans lequel
le premier dispositif réseau (1) inclut une unité d'informations de confiance (10) conçue pour générer des données d'informations de confiance, appliquer une protection contre les modifications sur les données d'informations de confiance générées, et transférer les données d'informations de confiance protégées au second dispositif réseau (2) ; et
le second dispositif réseau (2) est conçu pour recevoir les données d'informations de confiance protégées à partir du premier dispositif réseau (1), stocker les données d'informations de confiance reçues, et fournir les informations de confiance stockées à un dispositif réseau supplémentaire (3),
dans lequel le second dispositif réseau (2) est conçu pour recevoir une demande pour des données d'informations de confiance à partir du premier dispositif réseau (3), la demande spécifiant un point temporel prédéterminé ou une période temporelle prédéterminée, et dans lequel les données d'informations de confiance fournies se rapportent au point temporel prédéterminé ou à la période temporelle prédéterminée.

2. Système selon la revendication 1, dans lequel l'unité d'informations de confiance (10) du premier dispositif de réseau (1) comprend une unité de stockage (12) conçue pour stocker les informations de confiance protégées.

3. Système selon la revendication 2, dans lequel l'unité d'informations de confiance (10) du premier dispositif de réseau (1) est conçue pour appliquer la protection contre les modifications sur la base de données d'informations de confiance précédentes.

4. Système selon l'une quelconque des revendications 1 à 3, dans lequel l'unité d'informations de confiance (10) du premier dispositif de réseau (1) est conçue pour appliquer la protection contre les modifications à l'aide d'une chaîne de blocs.

5. Système selon l'une quelconque des revendications 1 à 4, dans lequel l'unité d'informations de confiance (10) comprend un module de plateforme de confiance, en particulier un module de plateforme de confiance 2.0.

6. Système selon l'une quelconque des revendications 1 à 5, dans lequel les données d'informations de confiance sont générées sur la base d'au moins l'une parmi des données de minuterie, une mesure d'une configuration logicielle, un comptage de cycles de démarrage.

7. Système selon l'une quelconque des revendications 1 à 6, dans lequel le point temporel prédéterminé ou la période temporelle prédéterminée inclut au moins un point temporel dans le passé.

8. Système selon l'une quelconque des revendications 1 à 7, comprenant un dispositif réseau supplémentaire (3) conçu pour demander des données d'informations de confiance à partir du second dispositif réseau (2), les données d'informations de confiance demandées se rapportant à un point temporel prédéterminé ou à une période temporelle prédéterminée.

9. Système selon la revendication 8, dans lequel le dispositif réseau supplémentaire (3) est conçu pour établir la confiance du premier dispositif réseau (1) sur la base des données d'informations de confiance fournies par le second dispositif réseau (2).

10. Système selon la revendication 8 ou 9, dans lequel les données d'informations de confiance demandées comprennent des données d'informations de confiance se rapportant à une configuration actuelle.

11. Système selon l'une quelconque des revendications 1 à 10, dans lequel le premier dispositif réseau (1) et le second dispositif réseau (2) comprennent chacun une interface de communication conçue pour réaliser une communication filaire ou sans fil dans un réseau.

12. Procédé pour l'établissement de la confiance d'un dispositif réseau, le procédé comprenant :
la génération (S1) de données d'informations de confiance par une unité d'informations de confiance (10) d'un premier dispositif réseau (1) ;
l'application (S2) d'une protection contre les modifications sur les données d'informations de confiance générées par l'unité d'informations de confiance (10) du premier dispositif réseau (1) ;
le transfert (S3) des données d'informations de confiance protégées, du premier dispositif réseau (1) à un second dispositif réseau (2) ;
le stockage (S4) des données d'informations de confiance transférées dans une mémoire du second dispositif réseau (2) ;
la réception d'une demande pour des données d'informations de confiance à partir d'un dispositif réseau supplémentaire (3), la demande spécifiant un point temporel prédéterminé ou une période temporelle prédéterminée ; et
la fourniture (S5) des informations de confiance stockées par le second dispositif réseau au dispositif réseau supplémentaire (3), dans lequel les données d'informations de confiance fournies se rapportent au point temporel prédéterminé ou à la période temporelle prédéterminée.

13. Procédé selon la revendication 12, dans lequel le point temporel prédéterminé ou la période temporelle prédéterminée inclut au moins un point temporel dans le passé.

14. Procédé selon la revendication 12 ou 13, comprenant l'établissement de la confiance du premier dispositif réseau sur la base des données d'informations de confiance fournies par le second dispositif réseau (2).
